# EUROPEAN PATENT APPLICATION

(11) **EP 2 413 531 A1**
(43) Date of publication of application: **01.02.2012**
(21) Application number: 09842169.6
(22) Date of filing: 04.09.2009
(51) Int. Cl.: H04L 7/04, H04L 25/02

(54) **INTERFACE CIRCUIT**

(30) Priority: 25.03.2009 JP 2009073506
(71) Applicant: Panasonic Corporation, Kadoma-shi Osaka 571-8501 (JP)
(72) Inventor: KOMATSU, Yoshihide, Shiromi 2-chome, Chuo-ku, Osaka-shi Osaka 540-6207 (JP); EBUCHI, Tsuyoshi, Shiromi 2-chome, Chuo-ku, Osaka-shi Osaka 540-6207 (JP); ARIMA, Yukio, Shiromi 2-chome, Chuo-ku, Osaka-shi Osaka 540-6207 (JP); IWATA, Toru, Shiromi 2-chome, Chuo-ku, Osaka-shi Osaka 540-6207 (JP)
(74) Representative: Grünecker, Kinkeldey, Stockmair & Schwanhäusser
(86) International application number: PCT/JP2009/004390
(87) International publication number: WO 2010/109553

(57) **Abstract**

An interface circuit including an LSI (10) in a host device (I), and an LSI (20) in a sub device (2), respectively. The LSI (10) generates a first transmission clock signal (TC1) and a first reception clock signal (RC1) separately in accordance with a first reference clock signal (RFC1). The LSI (10) also generates a second reference clock signal (RFC2) for a sub device (2). The reference clock signal (RFC2) is converted into a differential clock signal, and then transmitted to the sub device (2). An LSI (20) of the sub device (2) generates a second transmission clock signal (TC2) and a second reception clock signal (RC2) separately in accordance with a third reference clock signal (RFC3) converted from the differential clock signal.

## Description

### TECHNICAL FIELD

The present invention relates to interface circuits, and particularly relates to an interface circuit for transmitting data bi-directionally between a host device and a sub device such as a memory card in the differential method capable of high-speed data transmission.

### BACKGROUND ART

In recent years, various types of interfaces have been employed for the data transmission between a host device and a sub device such as a memory card. Among them, the differential method is used as one measure taken to increase transmission speed (for example, see PATENT DOCUMENT 1). This is because the differential method enables low-amplitude transmission. If a channel is impedance-matched to achieve an ideal channel, no load is found therein over a long distance of several meters, thereby achieving high-speed signal transmission.

In the methods of the DDR (Double Data Rate) and the XDR (Extreme Data Rate), as high-speed memory interface standards, in order to simplify the circuit of a memory device for cost reduction, the host device controls the whole transmission system in respect of timing adjustment, including clock latency. The memory device, which has a simple configuration, makes no timing adjustment. In the memory device, data is imported in accordance with the clock signal inputted thereto.

A method is known, which ensures clock and data timings in high-speed differential transmission. In this method, for example, a clock recovery circuit is mounted on the receiver so that the timing of importing differential data is adjusted. In addition, another method is proposed, in which the transmitter changes the output timing of data to be transmitted, and the receiver transmits a synchronizing signal to the transmitter when the receiver receives the transmitted data properly for ensuring timing (for example, see PATENT DOCUMENT 2).

### CITATION LIST

### PATENT DOCUMENT

PATENT DOCUMENT 1: Japanese Patent Publication No. 2008-186077
PATENT DOCUMENT 2: United States Patent No. 7408995

### SUMMARY OF THE INVENTION

### TECHNICAL PROBLEM

However, with the conventional high-speed differential transmission methods, in a configuration having a clock source only in the host device thereof, clock and data latencies occur inevitably. In the above method of adjusting timing with a synchronizing signal, synchronization has to be performed in response to the clock timing with data changing with LSI temperature changes, etc. Therefore, since a synchronizing signal has to be exchanged between the transmitter and the receiver over a predetermined period, the method is not suited for a system which transmits data continuously.

In views of the above, it is an object of the present invention to provide an interface circuit for transmitting data bi-directionally between a host device and a sub device, even in a configuration having a clock source only in the host device thereof, thereby reducing clock and data latencies, as well as achieving a stable high-speed data transmission.

### SOLUTION TO THE PROBLEM

According to an aspect of the present invention, an interface circuit for transmitting data bi-directionally between a host device and a sub device such as a memory card includes a first LSI mounted on the host device, the first LSI having: a first clock generating circuit for generating a first transmission clock signal and a first reception clock signal separately in accordance with a first reference clock signal, and also for generating a second reference clock signal for the sub device in accordance with the first reference clock signal; a differential driver for converting the second reference clock signal into a differential clock signal, to output the differential clock signal to the sub device; a first transmitting circuit block for converting parallel data into a differential serial signal by using the first transmission clock signal, to output the differential serial signal to the sub device; and a first receiving circuit block for receiving the differential serial signal from the sub device, to convert the differential serial signal into parallel data by using the first reception clock signal, after adjusting timing of the differential serial signal. The interface circuit further includes a second LSI mounted on the sub device, the second LSI having: a differential receiver for receiving the differential clock signal from the host device, to convert the differential clock signal into a third reference clock signal; a second clock generating circuit for generating a second transmission clock signal and a second reception clock signal separately in accordance with the third reference clock signal; and a second transmitting circuit block for converting parallel data into a differential serial signal by using the second transmission clock signal, to output the differential serial signal to the host device; and a second receiving circuit block for receiving the differential serial signal from the host device, to convert the differential serial signal into parallel data by using the second reception clock signal, after adjusting timing of the differential serial signal.

According to the present invention, in the host device, in accordance with a first reference clock signal, a first transmission clock signal and a first reception clock signal are generated separately. At the same time, in accordance with the first reference clock signal, a second reference clock signal is generated for the sub device. The second reference clock signal is converted into a differential clock signal, and then transmitted from the host device to the sub device. In the sub device, the received differential clock signal is converted into a third reference clock signal. In accordance with the third reference clock signal, a second transmission clock signal and a second reception clock signal are generated separately. Specifically, in a configuration having a clock source such as a crystal resonator only in the host device thereof, each the operation timing of the host device and the sub device is ensured. As a result, clock and data latencies are reduced in bi-directional data transmission.

Furthermore, the first clock generating circuit is a multiphase-clock-signal generating circuit for outputting a multiphase clock signal. The first clock generating circuit is preferably configured so that the band widths of the first transmission clock signal and the first reception clock signal can differ from each other in range. The first clock generating circuit is also preferably configured that the band widths thereof are dynamically changeable. The second clock generating circuit is a multiphase-clock-signal generating circuit for outputting a multiphase clock signal. The second clock generating circuit is preferably configured so that the band widths of the second transmission clock signal and the second reception clock signal can differ from each other in range. The second clock generating circuit is also preferably configured so that the band widths thereof are dynamically changeable.

As a result, frequency characteristics are further stabilized during data transmission.

The first LSI further includes a bias circuit an output terminal of which is connected to the middle of a terminator connected between a first input/output terminal pair. The bias circuit preferably keeps common potentials to be predetermined values at least while no data is transmitted.

As a result, the data transmission emerging as problem when transmission direction is switched is stabilized, thereby reducing switching time.

### ADVANTAGES OF THE INVENTION

According to the present invention, in a configuration having a clock source only in the host device thereof, the operation timing of each of the host device and the sub device is ensured, thereby achieving a stable bi-directional data transmission.

### BRIEF DESCRIPTION OF THE DRAWINGS

[FIG. 1] FIG. 1 illustrates a configuration including an interface circuit according to an embodiment.
[FIG. 2] FIG. 2 conceptually illustrates a feature for achieving a communication system according to the embodiment.
[FIG. 3] FIG. 3 illustrates how to stabilize common potentials according to the embodiment.
[FIG. 4] FIG. 4 illustrates an example of a bias circuit according to the embodiment.

### DESCRIPTION OF EMBODIMENT

Hereinafter, an embodiment of the present invention will be described with reference to the drawings.

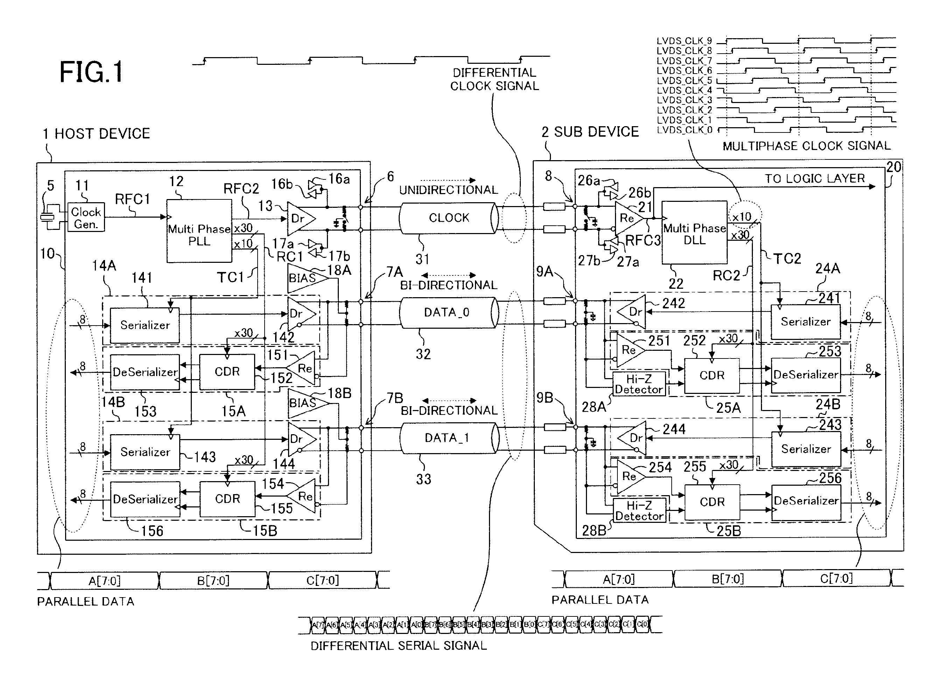

FIG. 1 illustrates a configuration including an interface circuit according to the embodiment. As illustrated in FIG 1, in the embodiment, an interface circuit is applied to a communication system for performing bi-directional data transfer between a host device 1 and a sub device 2. The interface circuit includes: a first LSI 10 mounted on the host device 1; and a second LSI 20 mounted on the sub device 2. Alternatively, each of the first LSI 10 and the second LSI 20 is also referred to as an interface circuit.

Examples of the host device 1 include a television such as a plasma display panel; a personal computer; a car navigation system; a mobile terminal; mobile audiovisual equipment; a digital camera; and a camcorder. Examples of the sub device 2 include a memory module. Examples of the memory module include a memory card such as an SD card, and an embedded memory. The host device 1 and the sub device 2 are electrically connected through channels 31, 32, and 33 for transmitting a differential signal. The channel 31 transmits a clock signal unidirectionally from the host device 1 to the sub device 2 with a differential clock pair. The channels 31 and 32 transmit data bi-directionally. The channels 31 and 32 transmit a differential serial signal either from the host device 1 to the sub device 2 or from the sub device 2 to the host device 1. Examples of the channels 31, 32, and 33 include a board and a cable.

In the first LSI 10 of the host device 1, a clock signal is oscillated by a crystal resonator 5. The clock signal outputted therefrom is inputted to a reference clock signal generator 11. The reference clock signal generator 11 generates a first reference clock signal RFC1. In accordance with the first reference clock signal RFC1, a first clock generating circuit 12 generates a first transmission clock signal TC1 and a first reception clock signal RC1 separately. In this case, the first clock generating circuit 12, which is a multiphase PLL circuit for outputting a multiphase clock signal, generates a 10-phase clock signal as the transmission clock signal TC1, as well as a 30-phase clock signal as the reception clock signal RC1. Furthermore, the first clock generating circuit 12 generates a second reference clock signal RFC2 for the sub device 2 in accordance with the first reference clock signal RFC1. The differential driver 13 converts the second reference clock signal RFC2 into a differential clock, and then outputs the differential clock to the sub device 2. The outputted differential clock is transmitted to the channel 31 through the output terminal pair 6.

In the second LSI 20 of the sub device 2, the differential receiver 21 receives the differential clock signal transmitted from the host device 1 through the input terminal pair 8, and then converts the received signal into a third reference clock signal RFC3. In accordance with the third reference clock signal RFC3, the second clock generating circuit 22 generates a second transmission clock signal TC2 and a second reception clock signal RC2 separately. In this case, the second clock generating circuit 22, which is a multiphase DLL circuit for outputting a multiphase clock signal, generates a 10-phase clock signal as the transmission clock signal TC2, as well as a 30-phase clock signal as the reception clock signal RC2.

Specifically, the configuration illustrated in FIG. 1 employs what is called the Clock Forwarded System, where a clock signal is transmitted from the host device 1 to the sub device 2. Even where any clock source such as a crystal resonator cannot be embedded in the sub device 2, the sub device 2 generates a transmission clock signal and a reception clock signal in accordance with the reference clock signal transmitted from the host device 1. Therefore, the operation timing of each of the host device and the sub device is ensured, thereby achieving a stable bi-directional data transmission.

The first clock generating circuit 12 is not limited to a multiphase PLL circuit, and a DLL circuit may be employed therefor. The second clock generating circuit 22 is not limited to a multiphase DLL circuit, and a PLL circuit may be employed therefor.

Both the first and second LSIs 10 and 20 illustrated in FIG. 1 have two routes of data transmission. Specifically, for the channel 32, the first LSI 10 includes a first transmitting circuit block 14A and a first receiving circuit block 15A, and the second LSI 20 includes a second transmitting circuit block 24A and a second receiving circuit block 25A. Similarly, for the channel 33, the first LSI 10 includes a first transmitting circuit block 14B and a first receiving circuit block 15B, and the second LSI 20 includes a second transmitting circuit block 24B and a second receiving circuit block 25B.

In the first LSI 1, the first transmitting circuit blocks 14A and 14B include serializers 141 and 143, and differential drivers 142 and 144, respectively. The first transmitting circuit blocks 14A and 14B convert parallel data into a differential serial signal using a first transmission clock signal TC1, and then output the signal to the sub device 2. Specifically, the serializers 141 and 143 convert parallel data into a differential serial signal using a first transmission clock signal TC1. In this case, the serializers 141 and 143 each add 2 bits to 8-bit parallel data, convert the added data into serial data, and then encrypt the serial data for output (8B10B). The differential drivers 142 and 144 convert the serial data outputted from the serializers 141 and 143 into differential serial signals for output, respectively. The differential serial signals outputted from the differential drivers 142 and 144 are outputted to the channels 32 and 33 through input/output terminal pairs 7A and 7B, respectively.

The first receiving circuit blocks 15A and 15B include differential receivers 151 and 154; clock data recovery (CDR) circuits 152 and 155; and deserializers 153 and 156, respectively. The first receiving circuit blocks 15A and 15B each receive a differential serial signal from the sub device 2, and convert the signal into parallel data using a first reception clock signal RC1 after adjusting the timing of the differential serial signal using the clock data recovery. Specifically, the differential receivers 151 and 154 convert the differential serial signals inputted from the channels 32 and 33 through the input/output terminal pairs 7A and 7B, respectively, into serial data, followed by output. CDR circuits 152 and 155 determine edge selection so that a clock signal is provided at a proper position in the data window of input data. The CDR circuits 152 and 155 each operate in accordance with a first reception clock signal RC1. Each of the CDR circuits is given here only for illustrative purposes as an example of a phase adjustment circuit. The timing adjustment of the differential serial signals may be made by other configurations. The deserializers 153 and 156 decode the serial data outputted from the CDR circuits 152 and 155, and then convert the data into eight-bit parallel data, followed by output (10B8B).

As described above, the input/output terminal pairs 7A and 7B as first input/output terminal pairs are used both as differential output terminals to which the first transmitting circuit blocks 14A and 14B are respectively connected, and as differential input terminals to which the first receiving circuit blocks 15A and 15B are respectively connected.

In the second LSI 20, the second transmitting circuit blocks 24A and 24B include serializers 241 and 243, and differential drivers 242 and 244, respectively. The second transmitting circuit blocks 24A and 24B each convert parallel data into a differential serial signal using a second transmission clock signal TC2, and then output the signal toward the host device 1. Specifically, the serializers 241 and 243 each convert parallel data into a differential serial signal using a second transmission clock signal TC2. In this case, the serializers 241 and 243 each add 2 bits to 8-bit parallel data, convert the added data into serial data, and then encrypt the serial data for output (8B10B). The differential drivers 242 and 244 convert the serial data outputted from the serializers 241 and 243 into differential serial signals for output, respectively. The differential serial signals outputted from the differential drivers 242 and 244 are outputted to the channels 32 and 33 through input/output terminal pairs 9A and 9B, respectively.

The second receiving circuit blocks 25A and 25B include differential receivers 251 and 254; clock data recovery (CDR) circuits 252 and 255; deserializers 253 and 256, respectively. The second receiving circuit blocks 25A and 25B each receive a differential serial signal from the host device 1, and convert the signal into parallel data using a second reception clock signal RC2 after adjusting the timing of the differential serial signal by using the clock data recovery (CDR) circuits 252 and 255. Specifically, the differential receivers 251 and 254 convert the differential serial signals inputted from the channels 32 and 33 through the input/output terminal pairs 9A and 9B, respectively, into serial data, followed by output. CDR circuits 252 and 255 determine edge selection so that a clock signal is provided at a proper position in the data window of input data. The CDR circuits 152 and 155 each operate in accordance with a second reception clock signal RC2. Each of the CDR circuits is given here only for illustrative purposes as an example of a phase adjustment circuit. The timing adjustment of the differential serial signals may be made by other configurations. The deserializers 253 and 256 decode the serial data outputted from the CDR circuits 252 and 255, and then convert the data into eight-bit parallel data, followed by output (10B8B).

As described above, the input/output terminal pairs 9A and 9B as second input/output terminal pairs are used both as differential output terminals to which the second transmitting circuit blocks 24A and 24B are respectively connected, and as differential input terminals to which the second receiving circuit blocks 25A and 25B are respectively connected.

Since this configuration enables a pair of differential terminal pairs to have bi-directional transmission and reception functions, bi-directional transmission is achieved even in a system having a limited number of terminals.

The first LSI 10 further includes bias circuits 18A and 18B for supplying a differential common potential to channels 32 and 33. The bias circuits 18A and 18B will be described later. The second LSI 20 further includes Hi-Z detection circuits 28A and 28B for determining that no differential signal is detectable in the channels 32 and 33. If the channels 32 and 33 have a Hi-Z (high impedance), there is no potential difference between the differential signal pairs. Therefore, if the differential potential difference falls within the range of a predetermined amplitude, the Hi-Z detection circuits 28A and 28B determines that no differential signal is detectable.

In the configuration illustrated in FIG. 1, differential data transmission is performed by the full-duplex or the half-duplex method, bi-directionally both from the host device 1 to the sub device 2, and from the sub device 2 to the host device 1.

The configuration illustrated in FIG. 1 supports a single-ended interface, and for example, a conventional single-ended data transmission is available therein. Specifically, the first LSI 10 further includes first drivers 16a and 17a for a single-ended interface; and first receivers 16b and 17b thererfor. The output terminals of the first drivers 16a and 17a and the input terminals of the first receivers 16b and 17b are connected to the output terminal of the differential driver 13. The second LSI 20 further includes second drivers 26a and 27a for a single-ended interface; and second receivers 26b and 27b therefor. The output terminals of the second drivers 26a and 27a and the input terminals of the second receivers 26b and 27b are connected to the input of the differential receiver 21.

The first and second clock generating circuits 12 and 22 are preferably configured to set the band width of the transmission clock signals TC1 and TC2 and the band width of the reception clock signals RC 1 and RC2 different in range. And the first and second clock generating circuits 12 and 22 are preferably configured to change the band widths thereof dynamically. For example, the band width of the transmission clock signals TC1 and TC2 is set at a relatively low value, in the range of 1 MHz to 2 MHz, while the band width of the reception clock signals RC1 and RC2 is set at a relatively high value, in the range of 2 MHz to 4 MHz. This enables the relation between the reception clock signals and the transmission clock signals to be set appropriately, thereby improving and stabilizing the frequency characteristics of the transmission system.

In order to achieve such a configuration, for example, if a multiphase PLL circuit is employed as a multiphase-clock-signal generating circuit, two voltage-controlled oscillators are mounted both for reception and for transmission. Alternatively, each of the first and second clock generating circuits 12 and 22 may include multiphase-clock-signal generating circuits both for transmission and for reception separately.

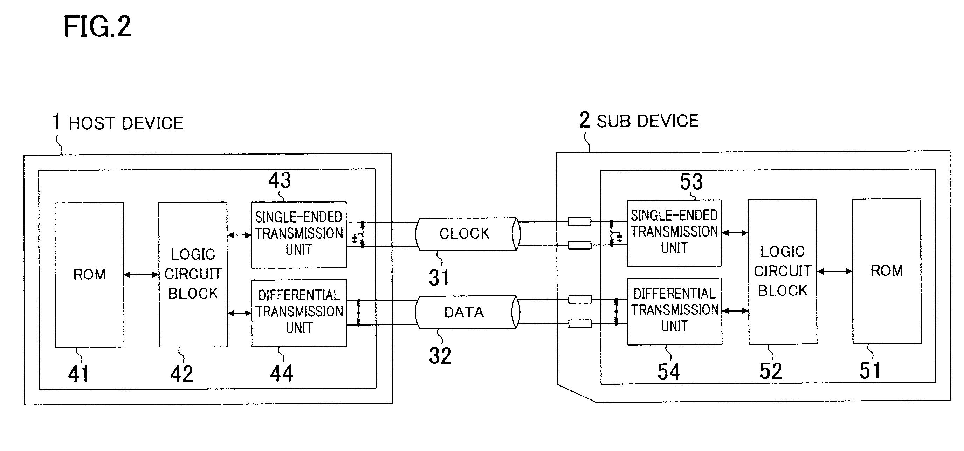

FIG. 2 conceptually illustrates a feature for achieving a communication system according to the embodiment. In FIG. 2, the host device 1 includes a ROM 41 for storing various kinds of information; a logic circuit block 42 (physical layer, link layer, and protocol layer) for controlling transmission; a single-ended transmission unit 43 for performing single-ended data transmission; and a differential transmission unit 44 for performing differential data transmission. In the configuration of FIG. 1, the first LSI 10 includes the single-ended transmission unit 43, and the differential transmission unit 44. Similarly, the sub device 2 includes a ROM 51 for storing various kinds of information; a logic circuit block 52 (physical layer, link layer, and protocol layer) for controlling transmission; a single-ended transmission unit 53 for performing single-ended data transmission; and a differential transmission unit 54 for performing differential data transmission. In the configuration of FIG. 1, the second LSI 20 includes the single-ended transmission unit 53 and the differential transmission unit 54.

In the host device 1, the ROM 41 stores the detailed information of the first clock generating circuit 12. For example, if the first clock generating circuit 12 includes a PLL circuit, the ROM 41 stores information such as frequency ranges and band widths. Similarly in the sub device 2, the ROM 51 stores the detailed information of the second clock generating circuit 22.

The host device 1 reads the detailed information of the second clock generating circuit 22 stored in the ROM 51 of the sub device 2, and makes settings for the first clock generating circuit 12 in accordance with the detailed information. For example, the host device 1 makes settings for the frequency range of the voltage-controlled oscillator of the first clock generating circuit 21 (for example, multiphase PLL circuit) to an optimal value (±50%, etc), in accordance with the frequency range information of the second clock generating circuit 22 (for example, multiphase DLL circuit) stored in the sub device 2. Alternatively, the host device 1 makes settings for the band width of the first clock generating circuit 21 to an optimal value (±50%, etc), in accordance with the band width information of the second clock generating circuit 22 stored in the sub device 2. This enables the host device 1 to make optimal settings for differential data transmission, as well as to support various types of sub devices 2.

While switching from single-ended data transmission to differential data transmission, the host device 1 preferably reads the detailed information of the second clock generating circuit 22 stored in the ROM 51 of the sub device 2. The host device 1 reads the clock generating circuit settings of the sub device 2 before starting differential data transmission, and then finishes optimal settings. Therefore, the host device 1 changes settings without any influence on actual differential data transmission.

In the configuration of FIG. 1, the common potentials of the differential channels are stabilized by the bias circuits 18A and 18B of the first LSI 10.

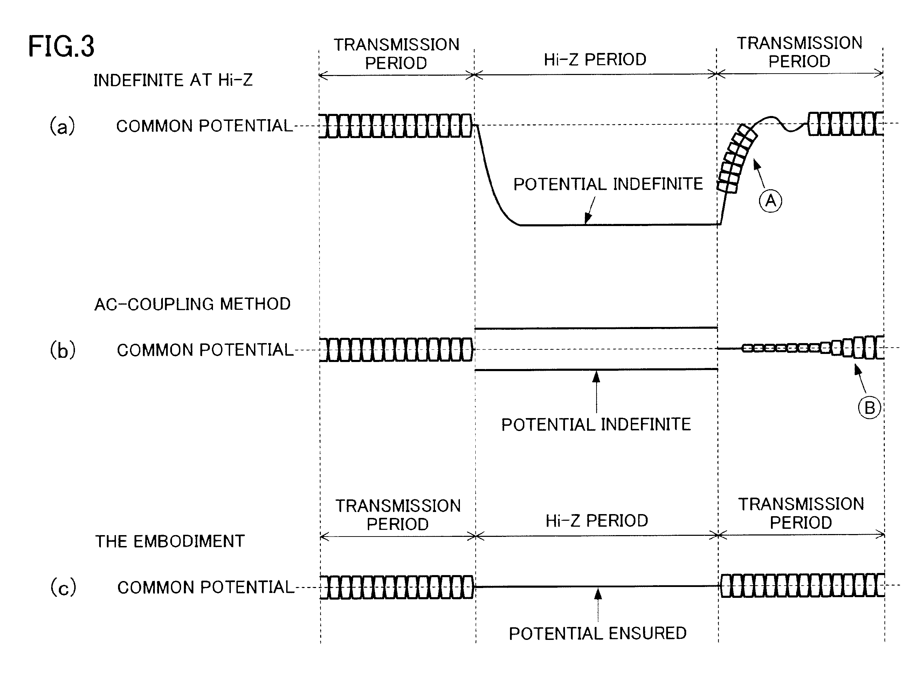

FIG. 3 illustrates how to stabilize common potentials according to the embodiment. As illustrated in FIG. 3(a), in a conventional method, during a high-impedance period (Hi-Z period) when no data is transmitted, a common potential becomes indefinite. Therefore, for example, when the transmission period starts after the transmission direction is switched, a certain amount of time is required until the common potential gets back to the normal state. As a result, the differential signal becomes unstable (A). As illustrated in FIG. 3(b), when the AC-coupling method is employed, since a certain amount of time is required from the start of the transmission period until the differential potential difference becomes large enough, the differential signal becomes unstable (B).

Therefore, in the embodiment, the bias circuits 18A and 18B keep the common potentials to be predetermined values regardless of transmission direction, during at least the high-impedance period when no data is transmitted. This enables the differential signal to be stable at the start of the transmission period after the transmission direction is switched, thereby reducing the time required for switching the transmission direction.

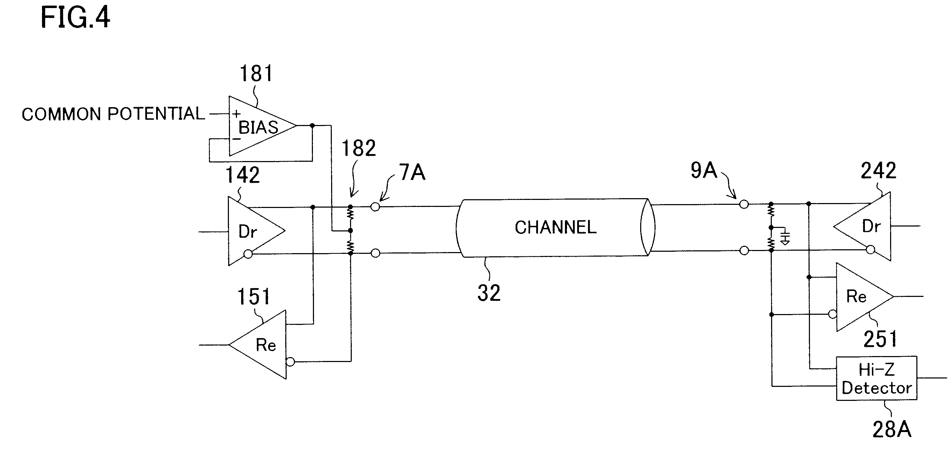

FIG. 4 illustrates an example of a bias circuit. FIG. 4 extracts a circuit configuration for the channel 32. In FIG. 4, the bias circuit includes a voltage follower circuit 181 having an operational amplifier. The output terminal of the voltage follower circuit 181 is connected to the middle of a terminator 182 connected between the input/output terminal pair 7A. The differential driver 142 employs a current system. When the output is at high level, P-channel side outputs constant current, and N-channel side draws the constant current. On the other hand, when the output is at low level, N-channel side outputs constant current and P-channel side draws the constant current. The voltage follower circuit 181 outputs the common potential generated within the LSI as a medium potential of the channel 32. This enables the common potential to be kept at a predetermined value.

### INDUSTRIAL APPLICABILITY

The interface circuit of the present invention achieves a stable bi-directional data transmission in a configuration having a clock source only in the host device thereof. The interface circuit of the present invention is useful, for example, for an SD card interface for a plasma display panel, and so on.

### DESCRIPTION OF REFERENCE CHARACTERS

- 1: host device
- 2: sub device
- 7A, 7B: first input/output terminal pair
- 9A, 9B: second input/output terminal pair
- 10: first LSI
- 12: first clock generating circuit
- 13: differential driver
- 14A, 14B: first transmitting circuit block
- 15A, 15B: first receiving circuit block
- 16a, 17a: first driver
- 16b, 17b: first receiver
- 18A, 18B: bias circuit
- 20: second LSI
- 22: second clock generating circuit
- 24A, 24B: second transmitting circuit block
- 25A, 25B: second receiving circuit block
- 26a, 27a: second driver
- 26b, 27b: second receiver
- 51: ROM
- 181: voltage-follower circuit (bias circuit)
- RFC1: first reference clock signal
- RFC2: second reference clock signal
- RFC3: third reference clock signal
- TC 1: first transmission clock signal
- RC1: first reception clock signal
- TC2: second transmission clock signal
- RC2: second reception clock signal

## Claims

1. An interface circuit for transmitting data bi-directionally between a host device and a sub device, comprising:
a first LSI mounted on the host device; and
a second LSI mounted on the sub device, wherein
the first LSI has:
a first clock generating circuit for generating a first transmission clock signal and a first reception clock signal separately in accordance with a first reference clock signal, and for generating a second reference clock signal for the sub device in accordance with the first reference clock signal;
a differential driver for converting the second reference clock signal into a differential clock signal, to output the differential clock signal to the sub device;
a first transmitting circuit block for converting parallel data into a first differential serial signal by using the first transmission clock signal, to output the first differential serial signal to the sub device; and
a first receiving circuit block for receiving a second differential serial signal from the sub device, to convert the second differential serial signal into parallel data by using the first reception clock signal, after adjusting timing of the second differential serial signal, and
the second LSI has:
a differential receiver for receiving the differential clock signal from the host device, to convert the differential clock signal into a third reference clock signal;
a second clock generating circuit for generating a second transmission clock signal and a second reception clock signal separately in accordance with the third reference clock signal;
a second transmitting circuit block for converting parallel data into a third differential serial signal by using the second transmission clock signal, to output the third differential serial signal to the host device; and
a second receiving circuit block for receiving a fourth differential serial signal from the host device, to convert the fourth differential serial signal into parallel data by using the second reception clock signal, after adjusting timing of the fourth differential serial signal.

2. The interface circuit of claim 1, wherein
the first LSI has a first input/output terminal pair which is used both as a differential output terminal connected to the first transmitting circuit block and as a differential input terminal connected to the first receiving circuit block, and
the second LSI has a second input/output terminal pair which is used both as a differential output terminal connected to the second transmitting circuit block and a differential input terminal connected to the second receiving circuit block.

3. The interface circuit of claim 1, wherein
the first receiving circuit block adjusts the timing of the second differential serial signal by using a phase adjustment circuit, and
the second receiving circuit block adjusts the timing of the fourth differential serial signal by using a phase adjustment circuit.

4. The interface circuit of claim 1, wherein differential data transmission is performed bi-directionally between the host device and the sub device, by either one of full-duplex and half-duplex methods.

5. The interface circuit of claim 1, wherein
the first LSI has a first driver and a first receiver for a single-ended interface,
an output terminal of the first driver and an input terminal of the first receiver are connected to an output terminal of the differential driver,
the second LSI has a second driver and a second receiver for a single-ended interface, and
an output terminal of the second driver and an input terminal of the second receiver are connected to an input terminal of the differential receiver.

6. The interface circuit of claim 1, wherein
the first clock generating circuit includes a multiphase-clock-signal generating circuit for outputting a multiphase clock signal, and is configured to set a band width of the first transmission clock signal and a band width of the first reception clock signal different in range, or to change the band width of the first transmission clock signal and the band width of the first reception clock signal dynamically, and
the second clock generating circuit includes a multiphase-clock-signal generating circuit for outputting a multiphase clock signal, and is configured to set a band width of the second transmission clock signal and a band width of the second reception clock signal different in range, or to change the band width of the second transmission clock signal and the band width of the second reception clock signal dynamically.

7. The interface circuit of claim 6, wherein each of the first and the second clock generating circuits includes multiphase-clock-signal generating circuits both for transmission and for reception separately.

8. The interface circuit of claim 1, wherein
the sub device includes a ROM for storing detailed information about the second clock generating circuit, and
the host device reads the detailed information stored in the ROM of the sub device, to make settings for the first clock generating circuit in accordance with the detailed information.

9. The interface circuit of claim 8, wherein
the host device and the sub device perform single-ended data transmission in addition to differential data transmission, and
the host device reads the detailed information stored in the ROM of the sub device while switching from single-ended data transmission to differential data transmission.

10. The interface circuit of claim 1, wherein
the first clock generating circuit includes a multiphase PLL circuit for outputting a multiphase clock signal, and
the second clock generating circuit includes a multiphase DLL circuit for outputting a multiphase clock signal.

11. The interface circuit of claim 10, wherein
the sub device has a ROM storing detailed information about the multiphase DLL circuit, and
the host device reads the detailed information stored in the ROM of the sub device, to make settings for the multiphase PLL circuit in accordance with the detailed information.

12. The interface circuit of claim 1, wherein
the first LSI has a bias circuit, an output terminal thereof being connected to the middle of a terminator connected between the first input/output terminal pair, and
the bias circuit keeps a common potential to be a predetermined value at least while no data is transmitted.

13. An interface circuit for transmitting data bi-directionally between a host device and a sub device, mounted on the host device, comprising:
a clock generating circuit for generating a transmission clock signal and a reception clock signal separately in accordance with a reference clock signal, and for generating a reference clock signal for the sub device in accordance with the reference clock signal;
a differential driver for converting the reference clock signal for the sub device into a differential clock, to output the differential clock to the sub device;
a transmitting circuit block for converting parallel data into a first differential serial signal by using the transmission clock signal, to output the first differential serial signal to the sub device; and
a receiving circuit block for receiving a second differential serial signal from the sub device, to convert the second differential serial signal into parallel data by using the reception clock signal, after adjusting timing of the second differential serial signal.

14. The interface circuit of claim 13, further comprising an input/output terminal pair which is used both as a differential output terminal connected to the transmitting circuit block and as a differential input terminal connected to the receiving circuit block.

15. The interface circuit of claim 13, wherein the receiving circuit block adjusts the timing of the second differential serial signal by using a phase adjustment circuit.

16. An interface circuit for transmitting data bi-directionally between a host device and a sub device, mounted on the sub device, comprising:
a differential receiver for receiving a differential clock signal from the host device, to convert the differential clock signal into a reference clock signal;
a clock generating circuit for generating a transmission clock signal and a reception clock signal separately in accordance with the reference clock signal;
a transmitting circuit block for converting parallel data into a first differential serial signal by using the transmission clock signal, to output the first differential serial signal to the host device; and
a receiving circuit block for receiving a second differential serial signal from the host device, to convert the second differential serial signal into parallel data by using the reception clock signal, after adjusting timing of the second differential serial signal.

17. The interface circuit of claim 16, further comprising an input/output terminal pair which is used both as a differential output terminal connected to the transmitting circuit block and as a differential input terminal connected to the receiving circuit block.

18. The interface circuit of claim 16, wherein the receiving circuit block adjusts the timing of the second differential serial signal by using a phase adjustment circuit.

19. The interface circuit of any one of claims 1, 13 and 16, wherein the sub device is a memory module.
